# EUROPEAN PATENT APPLICATION

(11) **EP 0 884 915 A2**
(43) Date of publication of application: **16.12.1998**
(21) Application number: 98201968.9
(22) Date of filing: 12.06.1998
(51) Int. Cl.: H04Q 7/26, H04B 7/26

(54) **Radio PBX for personal communications system**

(30) Priority: 12.06.1997 JP 191755/97; 30.09.1997 JP 304821/97; 13.10.1997 JP 315780/97; 20.10.1997 JP 323708/97; 28.10.1997 JP 334769/97; 29.10.1997 JP 334770/97; 09.11.1997 JP 345672/97; 09.11.1997 JP 345671/97; 25.11.1997 JP 363042/97; 24.02.1998 JP 84869/98; 03.03.1998 JP 93813/98; 04.03.1998 JP 95145/98; 09.03.1998 JP 99803/98
(71) Applicant: Radio Communication Systems Limited, Amagasaki-shi, Hyogo 661-0035 (JP)
(72) Inventor: Niki, Yoshiro, Nagoya-shi, Hyogo 661-0035 (JP)
(74) Representative: Gee, Steven William

(57) **Abstract**

A Radio PBX for use in a Digital Mobile Telephone system includes a plurality of transceivers to transmit and receive RF signals to and from subscriber units and/or an external base station in which at least one set of transmitter and receiver is communicating those RF signals, converting their frequencies and/or protocol, and said radio PBX is connected to one common antenna communicating with the subscriber unit and/or one common antenna communicating with the base station. The transceivers have a capability to convert said RF signals into base band signals and modulate them into new RF signals by adapting said base band signals between said transmitter and receiver. Moreover, each transceiver is tailored and/or automatically assigned for one of the Control trunk, Communication trunk, Local Line trunk, Service trunk, and/or Incoming and Outgoing Line trunk within a radio PBX.

The control trunk is provided to synchronize with an external base station, and to control the control channel to and from an external base station and/or subscriber unit within a serving area. The communication trunk is provided to connect the communications between said base station and said subscriber units, and/or between the control trunk and said subscriber units. The local line trunk is provided to connect the communications between said subscriber units. The service trunk provides 3-way call bridge, voice mail, etc. The incoming and outgoing line trunk is provided to connect the communications between telephone lines and said subscriber units, and/or between telephone lines and communication trunks.

The incoming and outgoing line trunk can be located remotely and can be connected to said radio PBX and/or communication trunks through open air propagation and/or existing CATV cable network and/or coaxial cable network.

By the present invention, very cheap and higher traffic capacity of a radio PBX can be realized. And moreover, the higher efficiency in the channel usage can be ensured.

## Description

This invention relates to mobile wireless communications systems and generally to the field of the radio PBX (Private Branch Exchange) facilities which include several kinds of trunk circuits to serve the portable subscriber unit(s) within a serving area by connecting through those trunk circuits, and more specifically, relates the configurations of the radio PBX facilities including the Control Trunks, Local Line Trunks, Service Trunk, Communication Trunks, and In-coming and Out-going Line Trunks in which at least one set of digital transmitter and receiver is included to receive and convert the RF signals into new RF signals by adapting the signals between said receiver and said transmitter in the FDMA (Frequency Division Multiple Access) repeater mode, cascade connection repeater mode, TDMA (Time Division Multiple Access) repeater mode, or CDMA (Code Division Multiple Access) repeater mode through a base band IC. The modulated RF signals are further passed to an antenna (or Distributed Antenna) to communicate with said subscriber unit(s).

In this invention, the control trunk is provided to synchronise with an external base station, and to control the control channel to and from an external base station and/or subscriber unit within a serving area. The communication trunk is provided to connect the communications between said base station and said subscriber units, and/or between the control trunk and said subscriber units. The local line trunk is provided to connect the communications between said subscriber units. The service trunk provides 3-way call bridge, voice mail, etc. The incoming and outgoing line trunk is provided to connect the communications between telephone lines and said subscriber units, and/or between telephone lines and communication trunks.

This Radio PBX (Private Branch Exchange) is aimed at reducing the system cost and increasing the traffic capacity by ensuring efficiency of channel usage.

In the prior art, a micro-cell system consists of a digital PBX, and stand alone base stations in which said PBX and base stations are connected through telephone cables. Said base stations have a plurality of micro-cell serving areas.

Problems may arise with the above described micro-cell system when applied for installation in actual personal communication systems. Since the traffic capacity of the stand alone base station is very limited, a large number of base stations must be installed in the serving area, and serious interference between these base stations can sometimes prevent the essential operations of the subscriber units, which increases the total system cost and reduces the efficiency of channel usage.

### SUMMARY OF THE INVENTION

The present invention provides a new and improved apparatus for a radio PBX in which a transceiver itself has a switching capability to interconnect the calls between subscriber units, or between a subscriber unit and an external base station, or between subscriber units and telephone lines. Since the transceivers are concentrated in the central location, and since a correct number of antennas are connected through coaxial cables, then the interface units and telephone cables to connect between individual stand alone base stations and PBX can be eliminated entirely, and then not only equipment cost but also installation cost can be reduced.

In brief summary, the radio PBX is installed in the central location, and a correct number of antennas are installed through coaxial cables within the serving area. Several kinds of Trunks are constructed to complete said radio PBX by applying a plurality of said transceivers. Existing CATV (Cable Television) cable networks can be used without any modifications as said coaxial cable for the present invention.

In one embodiment, a set of transceivers can be constructed as a control trunk, communication trunk, local line trunk, service trunk, or incoming and outgoing trunk installed within the present radio PBX.

In a second embodiment, the incoming and outgoing trunk is in communication with the present Radio PBX through open air, or coaxial cable network, or CATV cable network, to ensure higher efficiency of channel usage.

In a third embodiment, the present Radio PBX can provide an economical seamless network for data communications.

### BRIEF DESCRIPTION OF THE DRAWINGS

The invention is described particularly in the appended claims. The above and further advantages of the invention will be better understood by referring to the following detailed description of illustrative embodiments taken in conjunction with the accompanying drawings, in which:
- FIG. 1: is a system block diagram including a distributed antenna constructed in accordance with the invention;
- FIG. 2: is another system block diagram including a distributed antenna constructed in accordance with the invention;
- FIG. 3: is a block diagram of a radio PBX including a control trunk and/or communication trunk constructed in accordance with the invention;
- FIG. 4: is another block diagram of a radio PBX including a control trunk and/or communication trunk constructed in accordance with the invention;
- FIG. 5: is another block diagram of a radio PBX including a local line trunk constructed in accordance with the invention;
- FIG. 6: is a block diagram of a radio PBX including a control trunk and a communication trunk, a local line trunk, and an incoming and outgoing trunk constructed in accordance with the invention;
- FIG. 7: is another system block diagram of a radio PBX in communication with an incoming and outgoing trunk through open air propagation constructed in accordance with the invention;
- FIG. 8: is a system block diagram of a radio PBX in communication with an incoming and outgoing trunk through an existing CATV cable network constructed in accordance with the invention;
- FIG. 9: is a system block diagram of a radio PBX in communication with an incoming and outgoing trunk through a coaxial cable network to provide a seamless data network constructed in accordance with the invention;
- FIG. 10: is yet another system block diagram of a radio PBX including a control trunk and/or communication trunk constructed in accordance with the invention;
- FIG. 11: is a timing chart between said incoming and outgoing trunk and the communicating radio PBXs constructed in accordance with the invention;
- FIG. 12: is another timing chart between said incoming and outgoing trunk and the communicating radio PBXs constructed in accordance with the invention;
- FIG. 13: is a block diagram of a prior art duplex RF repeater system.

### DETAILED DESCRIPTION OF ILLUSTRATIVE EMBODIMENTS

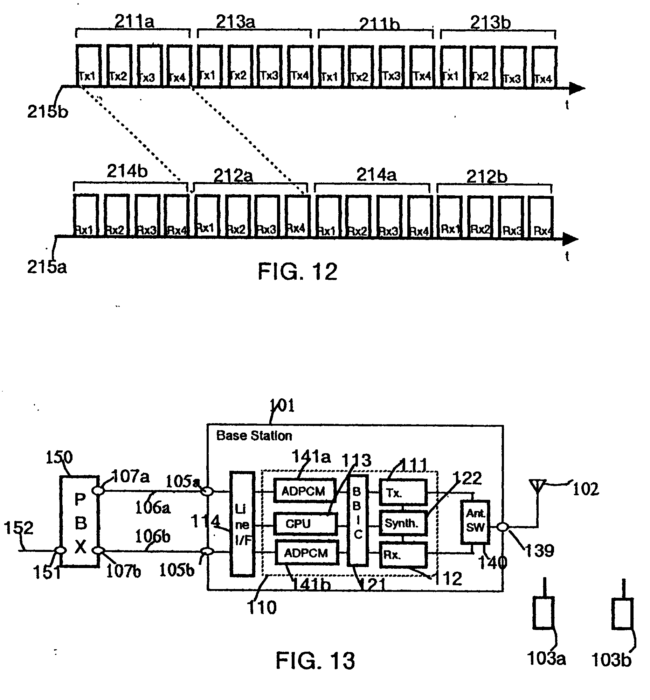

With reference to FIG. 13, there is illustrated a stand alone base station 101 to and from a micro-cell coverage area, and which is connected to a PBX 150 through a line interface unit 114 and the telephone cables 106a and 106b. In said Base Station 101, a digital transceiver 110 communicates with an antenna 102 through the antenna terminal 139 to transmit and receive RF signals to and from subscriber units 103a and/or 103b. Said PBX 150 is further connected to the telephone lines 152 through the MDF (Main Distribution Frame) 151.

Said transceiver 110 includes at least one transmitter 111, receiver 112, base band IC 121, synthesizer 122, controller 113, antenna switch 140, and ADPCM (Adaptive Differential Pulse Code Modulation) codec 141a and 141b. This scheme is not always cost effective and the traffic capacity is very limited, even if a plurality of stand alone base stations are connected to the PBX through telephone cables, and these base stations have individual micro-cells to serve coverage areas and these coverage areas are not overlapping.

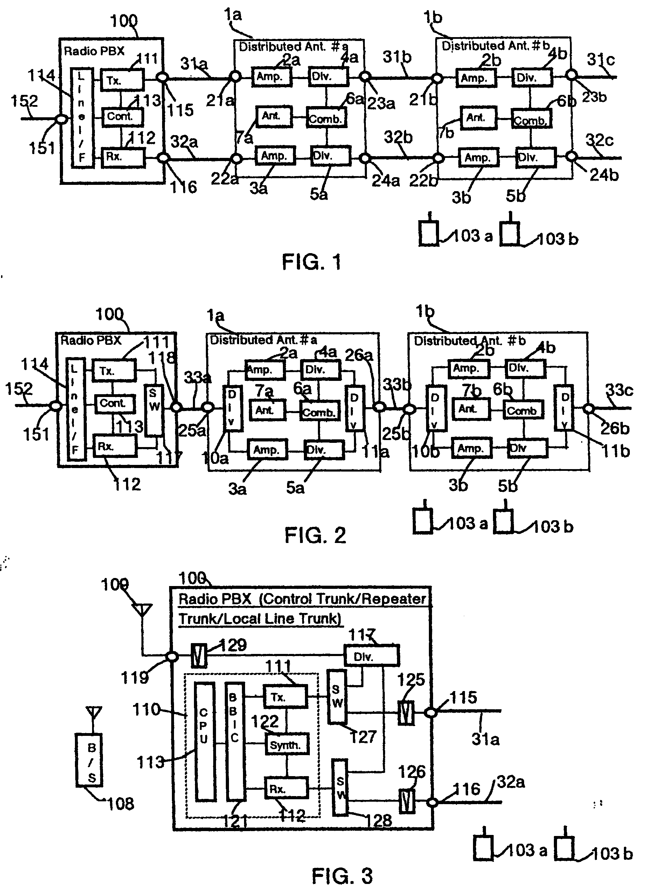

With reference to FIG. 1, the RF signals from the transmitter 111 of the radio PBX 100, are in communication with the distributed antenna 1a at the terminal 21a, and to the distributed antenna 1b at the terminal 21b, through the coaxial cables 31a and 31b. The receiver 112 of said radio PBX is in communication with the distributed antenna 1a at the terminal 22a, and to the distributed antenna 1b at the terminal 22b, through the coaxial cables 32a and 32b. Said transmitter 111 and receiver 112 are controlled by the controller 113, and communicate with the telephone lines 152 through the line interface unit 114 and the MDF 151. In said distributed antenna 1a and 1b, the down link amplifiers 2a and 2b amplify the down link RF signals, and these signals are communicated to the respective divider 4a and 4b, and then communicated to the respective built-in antenna element 7a and 7b through the combiner 6a and 6b. These signals are radiated from said built-in antenna element 7a and 7b, and communicated to the subscriber units 103a and/or 103b. The other branch of said dividers 4a and 4b are connected to the respective terminal 23a and 23b to connect to the next stage of said distributed antenna 1a or 1b. Since the amplifier gain of the amplifiers 2a and 2b are adjusted to match the total loss of the coaxial cable 31a or 31b, divider 4a or 4b, and combiner 6a or 6b, then the radiation power from the antenna element 7a or 7b and the output power from the terminal 23a or 23b are almost the same magnitude as the power output from the transmitter 111 of said radio PBX 100.

On the other hand, the RF signals transmitted from said subscriber unit 103a and/or 103b are received by the built-in antenna element 7a or 7b first, and communicated to the up-link amplifier 3a or 3b through the combiner 6a or 6b and divider 5a or 5b. These amplified RF signals are further communicated to the receiver 112 of said radio PBX 100 through the coaxial cable 32a and/or 32b and terminal 116. The other branch of the dividers 5a and 5b are connected to the respective terminal 24a and 24b to connect to the next stage of said distributed antenna 1a or 1b. Since the amplifiers 3a and 3b compensate the losses caused by the coaxial cable 32a and 32b, the RF signals transmitted from said subscriber units 103a or 103b are received by the receiver 112 with high sensitivity.

With reference to FIG. 2, the radio PBX 100 constructed in accordance with this invention is in communication with the terminal 25a or 25b of the distributed antenna 1a or 1b through coaxial cables 33a or 33b. Within said distributed antenna 1a and 1b, the divider 10a and 11a, and 10b and 11b respectively are added to communicate with a single coaxial cable 33a or 33b, when compared with FIG. 1 above.

With reference to FIG. 3, a control trunk and/or communication trunk and/or local line trunk 110 within a radio PBX 100 constructed in accordance with this invention communicates with the external base station 108 through the antenna 109. The down-link RF signals from said base station 108 are received by the antenna 109 and coupled to the receiver 112 through the band pass filter 129, divider 117, and antenna switch 128, and said receiver 112 (in combination with the base band IC 121) converts said RF signals into base band signals, and the transmitter 111 (in combination with the base band IC 121) modulates said base band signals into new RF signals by adapting said base band signals between said receiver 112 and transmitter 111 in the TDMA repeater mode or CDMA repeater mode through the base band IC 121 and controller 113, and said RF signals are transmitted towards the coaxial cable 31a at the terminal 115 through the antenna switch 127 and band pass filter 125, and transmitted towards said subscriber units 103a and/or 103b through said distributed antenna as described in relation to FIG. 1 above.

On the other hand, the up-link RF signals at the terminal 116, which are transmitted from said subscriber units 103a and/or 103b, are amplified by said distributed antenna 1 as described above in relation to FIG. 1, and are communicated to and received by the receiver 112 through the band pass filter 126 and antenna switch 128, and said receiver 112 (in combination with the base band IC 121) converts said RF signals into the base band signals, and the transmitter 111 (in combination with the base band IC 121) modulates said base band signals into new RF signals by adapting said base band signals between said receiver 112 and said transmitter 111 in the TDMA or CDMA repeater mode through the base band IC 121 and controller 113, and said RF signals are transmitted towards said base station 108 through the antenna 109, band pass filter 129, divider 117, and antenna switch 127. Moreover, subscriber units 103a and 103b can communicate with each other through said transceiver 110.

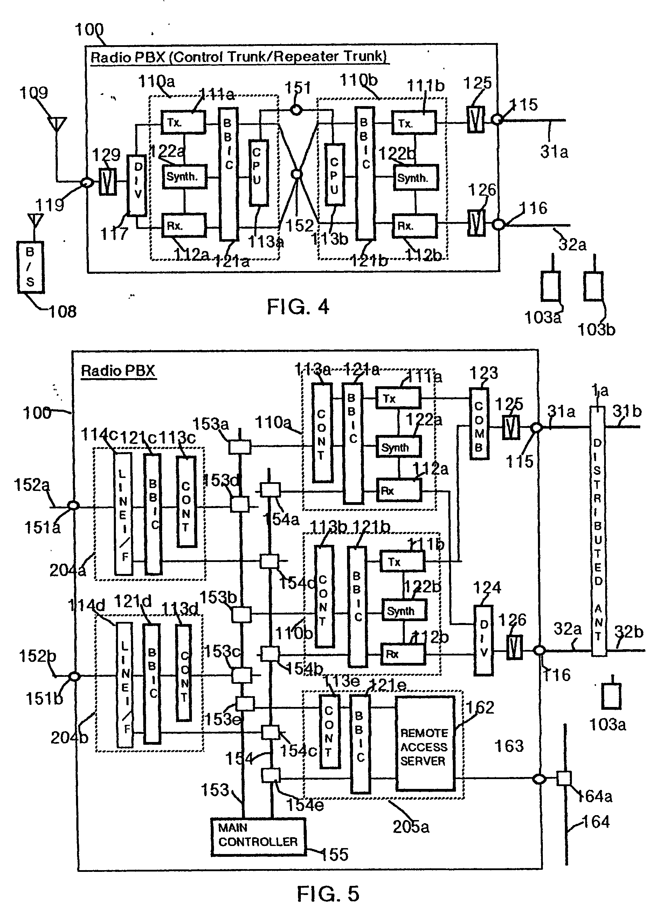

With reference to FIG. 4, another type of control trunk and/or communication trunk 110 within a radio PBX 100 constructed in accordance with this invention is in communication with the external base station 108 through the antenna 109. The down-link RF signals from said base station 108 are received by the antenna 109 and coupled to the receiver 112a through the band pass filter 129 and divider 117, and said receiver 112a converts said RF signals into base band signals, and the transmitter 111b modulates said base band signals into new RF signals by adapting said base band signals between said receiver 112a and transmitter 111b in the FDMA or cascade connections repeater mode through the base band IC 121a and 121b, and said RF signals are transmitted towards the coaxial cable 31a at the terminal 115 through the band pass filter 125, and communicated to subscriber units 103a and/or 103b through said distributed antenna as described in relation to FIG. 1 above.

On the other hand, the up-link RF signals at the terminal 116, which are transmitted from said subscriber units 103a and/or 103b, are amplified by said distributed antenna 1 as described above in relation to FIG. 1, and are communicated to and received by the receiver 112b through the band pass filter 126, and said receiver 112b converts said RF signals into base band signals, and the transmitter 112b modulates said base band signals into new RF signals by adapting said base band signals between said receiver 112b and said transmitter 111a in the FDMA or cascade connection repeater mode through the base band ICs 121a and 121b, and said RF signals are transmitted towards said base station 108 through the antenna 109, band pass filter 129, and divider 117.

The controllers 113a and 113b can intercommunicate with each other through serial input/output ports.

With reference to FIG. 5, another type of local line trunk and/or 3-way call trunk 110a and 110b, incoming and outgoing line trunk 204a and 204b, and data service trunk 205a within a radio PBX 100 constructed in accordance with this invention are depicted. The up-link RF signals from the subscriber unit 103a are communicated to the distributed antenna 1a, and further communicated to one of the receivers 112a and 112b through the band pass filter 126 and divider 124, and said receiver 112a or 112b and transmitter 111a or 111b respectively adapt the base band signals between said receiver 112a or 112b and the corresponding transmitter 111a and 111b in the TDMA or CDMA repeater mode through the base band IC 121a and/or 121b and the controller 113a and/or 113b. Said RF signals are transmitted towards said distributed antenna 1a and communicated to subscriber unit 103a as described in relation to FIG. 1 above.

The incoming and outgoing trunk 204a and 204b communicate with the telephone lines 152a and 152b through the terminals 151a and 151b, and line interface unit 114c and 114d respectively. Said line interface units 114c and 114d are further in communication with the base band IC 121c and 121d, and controller 113c and 113d, respectively.

The data service trunk 205a is in communication with the external LAN (Local Area Network) 164 through the terminal 163 and node 164a, and the remote access server 162 is in communication with the base band IC 121e, and controller 113e.

Said base band ICs 121a, 121b, 121c, 121d, and 121e are interconnected through the data highway 154 at the nodes 154a, 154b, 154c, 154d, and 154e, and controllers 113a, 113b, 113c, 113d, and 113e are interconnected to said LAN 153 at the nodes 153a, 153b, 153c, 153d, and 153e. Said data highway 154 and LAN 153 can be controlled and/or managed by the main controller 155. Said base band signals can be interconnected between these trunks, then the incoming and outgoing calls, 3-way calls, and other complicated functions such as call transfer, call waiting, etc. can be performed by the above schemes.

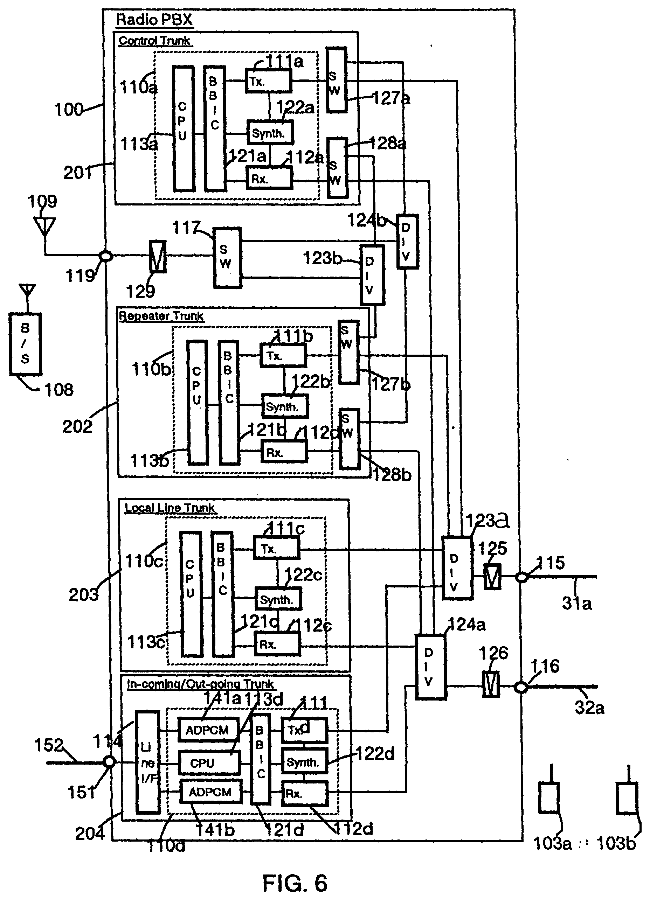

With reference to FIG. 6, control trunk 201 and communication trunk 202, local line trunk 203, and incoming and outgoing trunk 204 of a radio PBX 100 constructed in accordance with this invention are in communication with the external base station 108 through the antenna 109. The up-link RF signals from the subscriber units 103a and/or 103b are in communication with the receivers 112a, 112b, 112c, and 112d through the band pass filter 126 and divider 124a, and the down-link RF signals from the transmitter 111a, 111b, 111c, and 111d are in communication with the coaxial cable 31a at the terminal 115 through the combiner 123a and band pass filter 125.

The incoming and outgoing trunk 204 consists of a transceiver 110d, and the line interface unit 114, which are connected to the telephone lines 152 at the MDF 151, and connected to respective branches of the divider 124a and combiner 123a. The up-link RF signals at the terminal 116 from said subscriber units 103a and/or 103b are in communication with the receiver 112d through the band pass filter 126, divider 124a. Said receiver 112d (in combination with the base band IC 121d) converts said RF signals into base band signals, and the signals are decoded into voice band signals or data by the base band IC 121 and ADPCM decoder 141a or 141b, and communicated to the telephone lines 152 through the line interface unit 114 and MDF 151. Voice band signals or data from the telephone lines 152 are connected to the ADPCM coder 141a or 141b through the line interface unit 114, and converted into base band signals, and the transmitter 111d (in combination with the base band IC 121d) modulates said base band signals into new RF signals which are communicated to the coaxial cable 31a at the terminal 115 through the combiner 123a and band pass filter 125, and said RF signals are transmitted towards subscriber unit 103a and/or 103b.

When additional trunks are added, the number of branches of the combiner 123a and divider 124a must be increased.

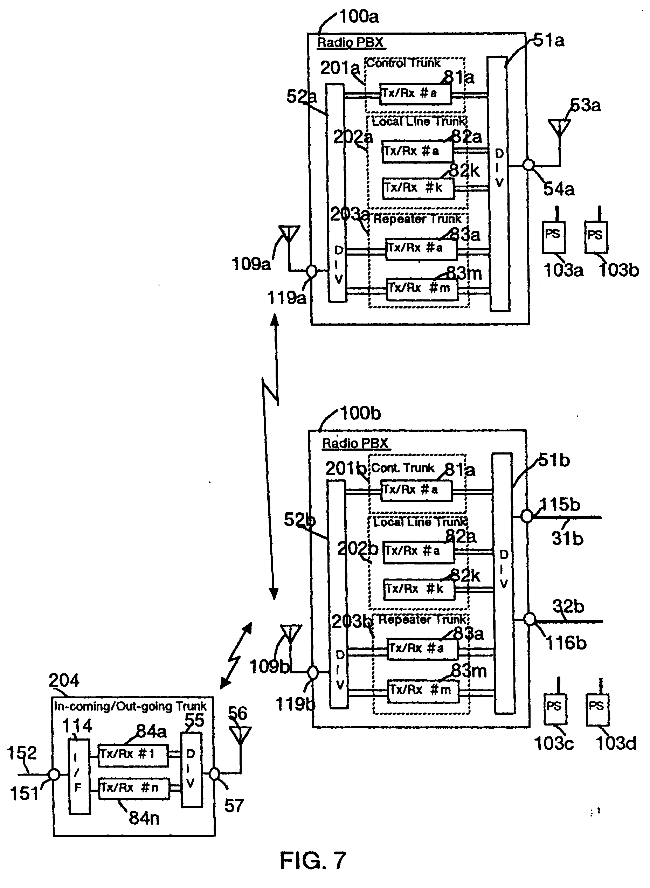

With reference to FIG. 7, in the radio PBX 100a and 100b, the control trunks 201a and 201b include at least one set of digital transceiver 81a, for transmitting and receiving the control signals to and from the subscriber units 103a and/or 103b. The local line trunks 202a and 202b include digital transceivers 82a---82k and provide intercommunications between said subscriber units 103a and/or 103b. The communication trunks 203a and 203b include digital transceivers 83a---83m and provide connections between the incoming and outgoing line trunk 204 and subscriber units 103a and/or 103b. RF terminals of said control trunk and communication trunk are in communication with the antenna dividers 51a, 51b, 52a, and 52b, and said dividers 52a and 52b are further in communication with the respective antennas 109a and 109b through the terminals 119a and 119b. RF terminals of said local line trunks are in communication with the dividers 51a and 51b, and said dividers 51a and 51b are further connected to the antenna 53a or coaxial cables 31b and 32b respectively to communicate with subscriber units 103a, 103b, 103c and/or 103d. Said incoming and outgoing trunk 204 includes transceivers 84a---84n, and RF signals of said trunks 204 are in communication with the antenna 56 through the divider 55 and the terminal 57. These antennas 56, 109b, and 109a are remotely located and communicate through open air propagation means. In this embodiment, said radio PBX 100b is acting as a tandem or linking exchange to interconnect the radio PBX 100a and the incoming and outgoing line trunk 204.

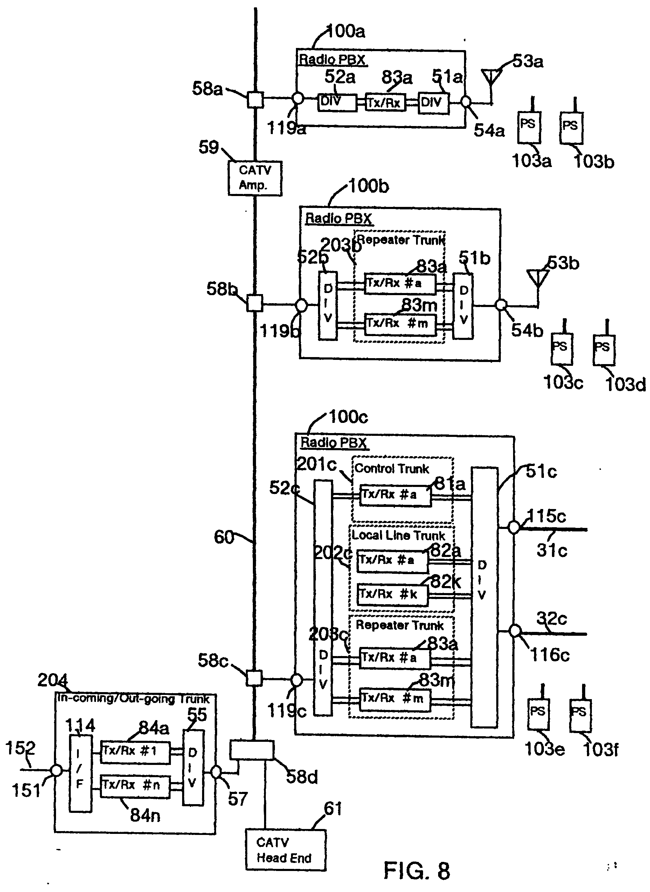

With reference to FIG. 8, the radio PBXs 100a, 100b, and 100c are in communication with the CATV cable network 60 through the couplers (or tap-offs) 58a, 58b, and 58c. The incoming and outgoing line trunk 204 is also in communication with said CATV cable network through the coupler 58d. Said coupler 58d further combines the CATV signals from the CATV Head End. The transceivers 84a---84n in said incoming and outgoing line trunk 204 are operated originally in, or have their operating frequency band converted by a converter into, the CATV frequency band (for example up-link 10MHz - 50MHz, down-link 70MHz - 550MHz) assigned for the existing CATV cable network. The transceivers 83a, 83a---83m, and 81a, 82a---82k, and 83a---83m in the radio PBXs 100a, 100b, and 100c are originally operated in, or have their operating frequency band converted by converters into, said frequency band assigned for said CATV cable network when those transceivers are in communication with the coupler (or tap-off) 58a, 58b, and 58c through the dividers 52a, 52b, and 52c.

On the other hand, said transceivers 83a, 83a---83m, and 81a, 82a---82k, and 83a---83m in the respective radio PBXs 100a, 100b, and 100c which are in communication with the antenna 53a, 53b, or coaxial cables 31c and 32c are originally operated in, or have their operating frequency band converted by converters into, the frequency band (for instance, 1.9GHz) assigned for the subscriber units 103a and 103b.

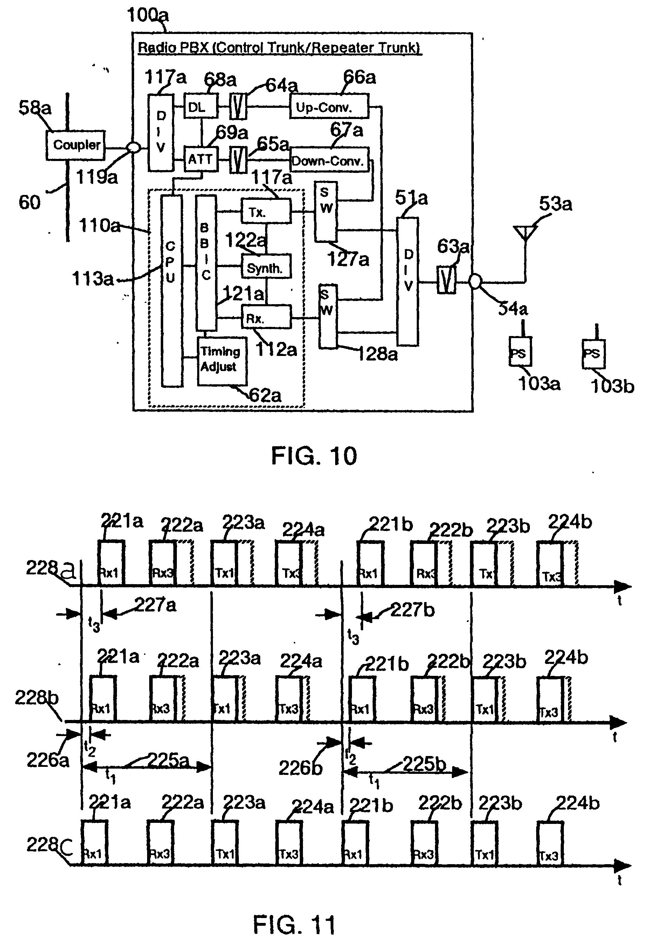

Said transceivers 83a, 83a---83m, and 81a, 82a---82k, and 83a---83m are communicating the base band signals by interconnecting between the transmitter and receiver in the FDMA or cascade connection repeater mode, TDMA or CDMA repeater mode. The CATV amplifiers are amplifying said CATV signals including RF signals transmitted to and from the transceiver 84a---84n in said incoming and outgoing line trunk 204. If the radio PBX is located in an area remote from said line trunk 204, said radio PBX must adjust the transmission timing towards said line trunk 204 to compensate for the delay, as explained later in relation to FIG. 11.

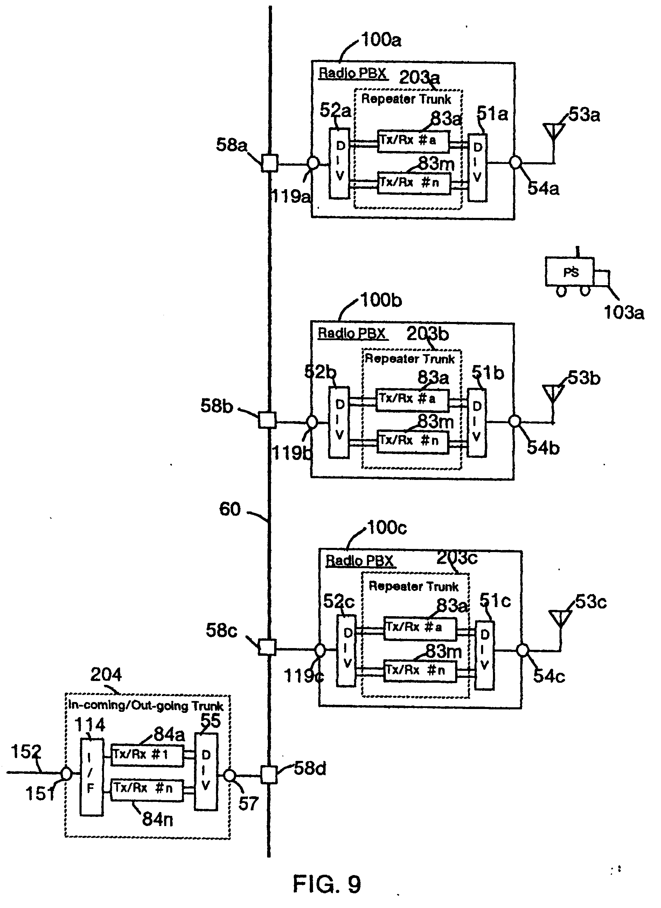

With reference to FIG. 9, the radio PBXs 100a, 100b, and 100c are connected to the coaxial cable 60 through the respective couplers 58a, 58b, and 58c. The incoming and outgoing line trunk 204 is also connected to said coaxial cable 60 through the coupler 58d. The transceivers 84a--84n in said incoming and outgoing line trunk 204 are operated originally in, or have their operating frequency band converted by a converter into, the frequency band (for instance, up-link 60MHz, down-link 70MHz) assigned for said cable network. The transceivers 83a---83m in the radio PBXs 100a, 100b, and 100c are originally operated in, or have their operating frequency bands converted by converters into, said frequency band assigned for said coaxial cable network when those transceivers are in communication with the respective coupler 58a, 58b, and 58c through the dividers 52a, 52b, and 52c.

On the other hand, the transceivers 83a---83m in the radio PBXs 100a, 100b, and 100c which are in communication with the antenna 53a, 53b, and 53c through dividers 51a, 51b, and 51c are originally operated in, or have their operating frequency band converted by converters into, the frequency band (for instance, 1.9GHz) assigned for the subscriber units 103a.

Said transceivers 83a---83m are communicating the base band signals by interconnecting between the transmitter and receiver in the FDMA or cascade connection repeater mode, TDMA or CDMA repeater mode. Booster amplifiers can be provided to amplify RF signals transmitted to and from the transceiver 84a---84n in said incoming and outgoing line trunk 204. If the radio PBX is located in an area remote from said line trunk 204, said radio PBX must adjust the transmission timing towards said line trunk 204 to compensate for the delay, as explained later in relation to FIG. 11.

If said radio PBXs 100a, 100b, and 100c are simultaneously transmitting at the same frequency towards said subscriber unit 103a, said subscriber unit 103a can continue the communication towards the telephone line 152 without any interruption, because the RF signals are coming from multiple directions wherever said subscriber unit 103a is located along the coaxial cable 60. On the contrary, when said radio PBXs 100a, 100b, and 100c are simultaneously communicating the RF signals from said subscriber unit 103a through said coaxial cable 60, and if the power output level to communicate said RF signals towards said line trunk 204 is controlled in accordance with the reception level from said subscriber unit 103a, the receiver in said line trunk 204 can receive said RF signals by the maximum ratio diversity mode. If the frequency channels are assigned individually for each radio PBX, the receiver in said line trunk 204 can receive said RF signals by the selection diversity mode.

With reference to FIG. 10, the radio PBX 100a is connected to the coaxial cable or CATV cable through a coupler 58a. On the other hand, the antenna 53a is connected to said radio PBX 100a at the terminal 54a and in communication with subscriber units 103a or 103b. When the up-link RF signals from said subscriber units 103a or 103b are received at the terminal 54a, said RF signals are communicated to the receiver 112a in the transceiver 110a through a band pass filter 63a, divider 51a, and antenna switch 128a, then said RF signals are converted into base band signals, and communicated to the transmitter 117a by adapting the base band signals in the TDMA repeater mode, or CDMA repeater mode through the base band IC 121a and controller 113a, and said base band signals are further modulated into RF signals and communicated to the coupler 58a through the antenna switch 127a, down-converter 67a, band pass filter 65a, attenuator 69a, and divider 117a. The transmission timing is controlled by the timing adjusting unit 62a, and transmission power output level is controlled by the attenuator 69a, and these are further controlled by said controller 113a.

The down-link RF signals from the coupler 58a are coupled to the receiver 112a in the transceiver 110a through the divider 117a, delay line 68a, band pass filter 64a, up-converter 66a, and antenna switch 128a, then said RF signals are converted into base band signals in the TDMA repeater mode, or CDMA repeater mode through the base band IC 121a and controller 113a, and said base band signals are further modulated into new RF signals and communicated to the antenna 53a through antenna switch 127a, divider 51a, band pass filter 63a, and terminal 54a. The delay line 68a is controlled by the controller 113a automatically, or preset manually, to adjust the transmission timing of the new RF signals versus the reception timing of the RF signals received from said line trunk 204 in accordance with the distance from said line trunk 204. Details of the control scheme are further discussed in relation to FIG. 11.

With reference to FIG. 11, 228c shows the transmission timings Tx1, Tx3, and reception timings Rx1, Rx3 at the radio PBX 100c which is locating closest to the incoming and outgoing line trunk 204. 228b shows the transmission timings Tx1, Tx3, and reception timings Rx1, Rx3 at the radio PBX 100b which is located a little bit farther from said line trunk 204. 228a shows the transmission timings Tx1, Tx3, and reception timings Rx1, Rx3 at the radio PBX 100a which is located a long way from said line trunk 204. Rx1 is the timing of the RF signals transmitted from said line trunk 204 being received at a radio PBX, Tx1 is the timing of the RF signals being received at said line trunk 204 from a radio PBX. Rx3 is the timing of the RF signals transmitted from said subscriber unit 103a being received at a radio PBX. Tx3 is the timing of the RF signals being received at said subscriber unit 103a from a radio PBX.

In 228c, it is assumed that any noticeable delays have not appeared in either the transmission timing or reception timing. In 228b, some noticeable delays 226a = t2 have appeared in the reception timing Rx1, and the other timings Tx1, Rx3, and Tx3 are adjusted (by t2) from the timings shown in the dotted lines. In 228a, further noticeable delays 227a = t3, have appeared in the reception timing Rx1, and the other timings Tx1, Rx3, and Tx3 are adjusted (by t3) from the timings shown in the dotted lines. By this process, the reception timings Tx1 at said line trunk 204 can be adjusted to be the same from any radio PBX.

With reference to FIG. 12, the transmission timing and reception timings are duplicated in the up-link RF signals and down-link RF signals. The transmission timings 211a and 211b (Tx1, Tx2, Tx3, and Tx4) and reception timings 212a and 212b (Rx1, Rx2, Rx3, and Rx4) are a set of TDD (Time Division Duplex) timings, and the transmission timings 213a and 213b (Tx1, Tx2, Tx3, and Tx4) and reception timings 214a and 214b (Rx1, Rx2, Rx3, and Rx4) are another set of TDD timings. These two timings can be transferred within a single coaxial cable as shown at 215a and 215b.

## Claims

1. A radio PBX (100, 100a-c) for use in a digital mobile communication system having a micro-cell serving area, the radio PBX comprising:
(1) a plurality of transceivers (82a-k, 83a-m) to transmit and receive RF signals to and from subscriber units (103a-d);
(2) common antenna means (1a) in communication with said transceivers;
(3) communication means (121, 121a-d) for adapting base band signals in between a transmitter (111a-d) and receiver (112a-d) of a transceiver;
(4) said transceivers being part of a trunk means (100, 202a-c, 203a-c); and
(5) control means (110a, 201a-c), to control said trunk means in accordance with control signals present in said RF signals.

2. A radio PBX (100, 100a-c) for use in a digital mobile communication system having a micro-cell serving area, the radio PBX comprising:
(1) a plurality of transceivers (82a-k, 83a-m) to transmit and receive RF signals to and from an external base station (108) and subscriber units (103a-d);
(2) first common antenna means (1a) and second common means (1b) in communication with said transceivers;
(3) antenna selection means between said first common antenna means and said second antenna means;
(4) communication means (121a-d) for adapting base band signals in between a transmitter (111a-d) and receiver (112a-d) of a transceiver;
(5) said transceivers being part of a trunk means (100, 202a-c, 203a-c); and
(6) control means (110a, 201a-c), to control said trunk means in accordance with control signals present in said RF signals.

3. A radio PBX as claimed in claim 1 or 2, wherein said transceivers are tailored and assigned for a control trunk (110a, 201a-c), local line trunk (202a-c), communication trunk (203a-c), service trunk (205a), incoming and outgoing line trunk (204a), and/or other necessary trunks.

4. A radio PBX as claimed in claim 1, 2, or 3, wherein said incoming and outgoing line trunk and said communication trunk are in communication through open air propagation.

5. A radio PBX as claimed in claim 1, 2, or 3, wherein said incoming and outgoing line trunk and said communication trunk are in communication through RF transmission means.

6. A radio PBX as claimed in claim 1, 2, 3, 4, or 5, wherein said trunk means adapt said base band signals in between a receiver and transmitter of a transceiver by adopting one of the following schemes:
(1) FDMA or cascade connection repeater mode;
(2) TDMA repeater mode; or
(3) CDMA repeater mode.

7. A radio PBX as claimed in claim 1, 2, 3, 4, or 5, wherein said common antenna means comprises:
(1) at least one RF transmission means (31a-b,32a-b) by which the PBX and said common antenna means can communicate;
(2) two isolated amplifier means (2a-b, 3a-b) to amplify the down-link RF signals and up-link RF signals;
(3) two divider means (4a-b, 5a-b) to divide the down-link RF signals and up-link RF signals into at least two branches;
(4) built-in antenna means (7a-b) which are in communication with one branch of said divider means; and
(5) at least one RF transmission means (31b-c, 32b-c) connected to another branch of said divider means.

8. A radio PBX as claimed in claim 1, 2, 3, 4, or 5, wherein said common antenna means comprises:
(1) at least one RF transmission means (31a-b,32a-b) by which the PBX and said common antenna means can communicate;
(2) two isolated amplifier means (2a-b, 3a-b) to amplify the down-link RF signals and up-link RF signals;
(3) two divider means (4a-b, 5a-b) to divide the down-link RF signals and up-link RF signals into at least two branches;
(4) antenna means (7a-b) which is in communication with one of the branches of said divider means through a combiner means (6a-b); and
(5) said combiner means including at least one set of transmitter and receiver to convert said RF signals into said base band signals, and to modulate said base band signals into new RF signals by adapting said base band signals in between said transmitter and receiver, and to communicate said RF signals in between said divider means and said antenna means; and
(6) at least one RF transmission cable (31b-c, 32b-c) connected to another branch of said divider means.

9. A radio PBX as claimed in claim 1, 2, 3, 4, or 5, wherein common amplifier means compensates for the losses occurring in the divider and combiner means to communicate with a plurality of receivers and transmitters.

10. A radio PBX as claimed in claim 1, 2, 3, 4, or 5, wherein each said transceiver includes at least one controller means (113a-d), and each said controller means has an installed control program including an intercommunication program.

11. A radio PBX as claimed in claim 1, 2, 3, 4, or 5, wherein said base band signals of each transceiver are interconnected through data highway means (154).

12. A radio PBX as claimed in claim 1, 2, 3, 4, or 5, wherein at least one common controller means (155) can intercommunicate with said controller means in each transceiver.

13. A radio PBX as claimed in claim 1, 2, 3, 4, or 5, wherein said incoming and outgoing line trunk (204a) is directly connected to a data highway (154).

14. A radio PBX system as claimed in claim 1, 2, 3, 4, or 5, wherein the frequency band for communication between said incoming and outgoing line trunk (204a) and said communication trunk (203a-c) is different from the frequency band for communication between said communication trunk and said subscriber unit (103a-d).

15. A radio PBX system as claimed in claim 1, 2, 3, 4, or 5, wherein the up-link frequency band for communicating from said incoming and outgoing trunk (204a) to said communication trunk (203a-c) is different from the down-link frequency band for communicating to said incoming and outgoing trunk from said communication trunk.

16. A radio PBX system as claimed in claim 1, 2, 3, 4, or 5, wherein said communication trunk (203a-c) comprises: (1) at least one set of transmitter and receiver to communicate the RF signals between the remotely located trunk means (204a) and the subscriber units (103a-d); (2) timing adjustment means (68a) to adjust the timing for transmission of said RF signals towards said subscriber units, and to make said subscriber unit receive said RF signals with the same timing; (3) timing adjustment means (62a) to adjust the timing for transmission of said RF signals towards said trunk means (204a), and to make said trunk means receive said RF signals with the same timing; and (4) level adjustment means (69a) to adjust the transmission level towards said trunk means in accordance with the reception level from said subscriber units.

17. A radio PBX system as claimed in claim 1, 2, 3, 4, or 5 wherein the first and second trunk means operate in the Time Division Duplex mode, and the RF signals of said trunk means are combined together with inter-digit timing to share a set of down-link and up-link RF transmission means.

18. A radio PBX system as claimed in claim 1, 2, 3, 4, or 5, wherein each communication trunk (203) transmits its RF signals in individually assigned frequencies towards the remotely located trunk means (204a).
